# EUROPÄISCHE PATENTANMELDUNG

(11) **EP 0 744 506 A1**
(43) Veröffentlichungstag der Anmeldung: **27.11.1996**
(21) Anmeldenummer: 95116108.2
(22) Anmeldetag: 12.10.1995
(51) Int. Cl.: E04B 1/61

(54) **Schwerlastschiebeverschluss**

(30) Priorität: 13.10.1994 SE 9403535
(71) Anmelder: Jürgens, Anke, D-44319 Dortmund (DE); Ehlert, Dirk, D-59174 Kamen (DE)
(72) Erfinder: Ehlert, Ralf, D-44319 Dortmund (DE)
(74) Vertreter: Ström, Tore

(57) **Zusammenfassung**

Schwerlastschiebeverschluss (1) zur Verriegelung zwei getrennter Konstruktionsteile (1a,1b). In zwei Flanschen (1, 2), die je auf eine Seite der Nahtstelle zwischen den Konstruktionsteilen vorgesehen sind und längs der Nahtstelle verlaufen, sind Schlitze (6) vorgesehen. Eine aus einem U-Eisen-Profil bestehende Schiene (3), die die Nahtstelle am Steg überbrückt und an deren Schenkeln Haken (7,8) angeformt sind, ist längsverschiebbar mit Bezug auf die Konstruktionsteile, damit die Haken durch Verschiebung der Schiene an den Schlitzen (6) der Konstruktionsteile einhaken und aushaken können.

## Beschreibung

Die Erfindung betrifft einen Schwerlastschiebeverschluss der zwei getrennte Konstruktionsteile statisch optimal verriegelt.

Der Schwerlastschiebeverschluss umfasst eine mit Haken angeordnete Schiene, welche mit Bezug auf die Konstruktionsteile verschiebbar ist, damit die Haken durch Längsverschiebung der Schiene an Schlitzen der Konstruktionsteile eingehakt und ausgehakt werden können.

Die üblichen Befestigungstechniken für zum Beispiel Ladeklappen an Stahlkonstruktionen sind punktueller Art. Dadurch wird die mechanische Festigkeit an der Nahtstelle zwischen den zu verriegelnden Konstruktionsteilen wesentlich kleiner als die der feststehenden Konstruktion. Bei hoher Krafteinwirkung zwischen den Befestigungspunkten werden die Halterungen abgerissen und öffnet sich die Schliessung.

Aufgabe der Erfindung ist es, den vorstehend genannten Nachteil abzuhelfen und eine universell, auch für Nachrüstungen, einsetzbare Technik mit einem verhältnismässig geringen Kostenaufwand vorzuschlagen.

Diese Aufgabe wird durch den Schwerlastschiebeverschluss laut Patentanspruch 1 gelöst.

Damit kann an den Rändern der Nahtstelle, je nach Materialstärkeneinsatz, eine höhere mechanische Festigkeit erreicht werden als sie die Hauptkonstruktion besitzt.

CH-A-424 164 beschreibt einen Schwerlastschiebeverschluss der oben genannten Art, der eine Schiene mit Haken aufweist, welche mit Bezug auf die Konstruktionsteile verschiebbar ist, damit die Haken an Schlitzen der Konstruktionsteile eingehakt und ausgehakt werden können. Bei diesem Verschluss werden Öffnungskräfte zwischen den beiden verriegelten Konstruktionsteilen von den Haken aufgenommen. Bei dem erfindungsgemässen Schiebeverschluss werden die Öffnungskräfte dagegen von dem die Nahtstelle überbrückenden U-Eisen-Profil aufgenommen, so dass die eingesetzte Materialstärke des Profils die mechanische Stabilität des Verschlusses entscheidet. Dadurch wird eine sichere Verriegelung gewährleistet.

Die Erfindung ist auf den beigefügten Zeichnungen veranschaulicht, von welchen weitere vorteilhafte Einzelheite der Erfindung zu entnehmen sind. Es zeigen:
FIG. 1 eine perspektivische Vorderansicht, teilweise in Schnitt des Schwerlastschiebeverschlusses in geschlossener Lage,
FIG. 2 eine Abwicklung der Vorderansicht und
FIG. 3 eine perspektivische Vorderansicht wie in FIG. 1 mit dem Verschluss in offener Lage.

Der Schwerlastschiebeverschluss besteht aus zwei spiegelbildlich gegenübergesetzten U-Eisen-Profilen 1 und 2. Das eine U-Eisen-Profil 1 ist an einen feststehenden Konstruktionsteil 1a rechts der Nahtstelle und das andere U-Eisen-Profil 2 an einen beweglichen Konstruktionsteil 2a links der Nahtstelle angeschweisst, genietet oder verschraubt. Mittels der spiegelbildlich gegenübergesetzten Pofile ist gleichzeitig Führung des beweglichen Konstruktionsteils vorgesehen. Ein in seiner Längsrichtung verschiebbares drittes U-Eisen-Profil 3 ist als Schiebeschliessprofil zur Verriegelung der beiden fest angeordneten U-Eisen-Profile 1 und 2 vorgesehen. Der eine Schenkel des Schliessprofils 3 ist durch ein Winkelprofil 4 auf dem Profil 1 gestützt, um hier eine enge Führung zu erreichen.

Die Profile 1 und 2 haben in ihren Schenkeln ausgefräste Schlitze 6 für die Einführung von Schliesshaken 7 und 8, die an den Schenkeln des Schiebeschliessprofils 3 angeformt sind. Durch Längsverschiebung des Schiebeschliessprofils können die Haken in die Schlitze eingehakt werden, um die Konstruktionsteile mit einander zu verriegeln, und bei Öffnen aus diesen Schlitzen wieder ausgehakt werden.

Es ist erkennbar, dass die Schliesshaken 7 für Einhaken in das Profil 1 auf dem feststehenden Konstruktionsteil 1a länger als die Schliesshaken 8 für Einhaken in das Profil 2 auf dem beweglichen Konstruktionsteil 2a sind. Damit wird verhindert, dass das Schliessprofil 3 beim Öffnen aus dem Profil 1 ausklinken kann. Der Differenzhub 9, der für Ausklinken der Haken 7 notwendig ist, kan mechanisch gesichert werden und wird nur für Demontage des Schiebeschliessprofils 3 aus dem Profil 1 benutzt.

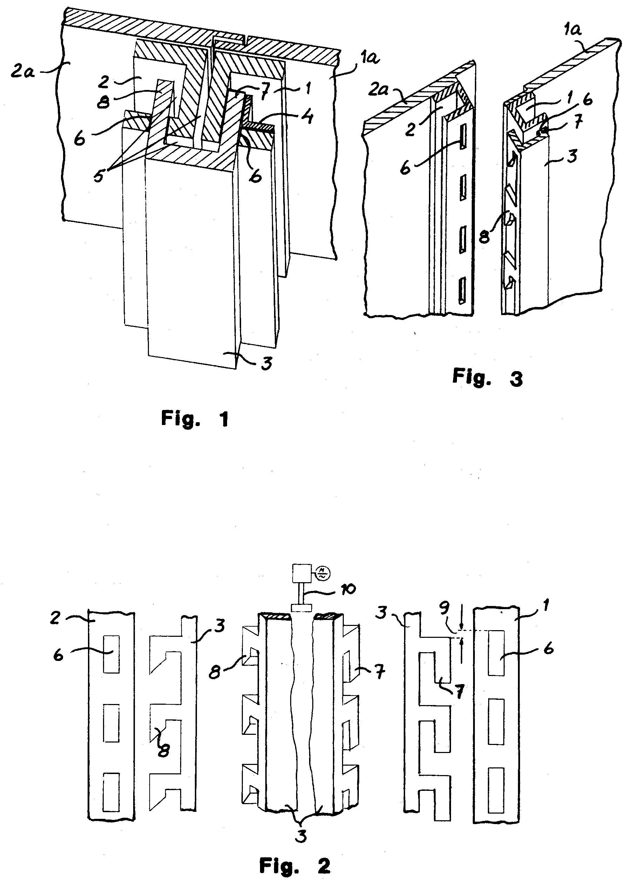

Wie aus FIG. 1 ersichtlich ist, sind Zwischenräume 5 zwischen den drei Profilen vorhanden, die mit Hartgummi ausgelegt werden können, um Bewegungsrausche zu verhindern.

Zur Verschiebung des Schliessprofiles 3 ist ein Getriebe-Hubspindel 10 mit Elektromotor und/oder manueller Treibvorrichtung vorgesehen.

Der Schwerlastschiebeverschluss laut der Erfindung kan in allen Lagen und Längen montiert werden.

Abrieb der Schliesshaken kann durch Stahlrollen verhindert werden, die auf den Schliesshaken federnd gelagert sind, um einen ständigen Druck auf eine zwischen den Konstruktionsteilen an der Nahtstelle angeordnete Dichtung zu erzeugen.

Übliche elektrische wie auch mechanische Sicherheits- und Überwachungseinrichtungen können mit dem Schiebeverschluss integriert werden, um ein selbstständiges Aushaken des Schliessprofils zu verhindern.

## Patentansprüche

1. Schwerlastschiebeverschluss zur Verriegelung zwei getrennter Konstruktionsteile (1a,1b), umfassend eine mit Haken (7, 8) angeordnete Schiene (3), welche mit Bezug auf die Konstruktionsteile verschiebbar ist, damit die Haken durch Verschiebung der Schiene an Schlitzen (6) der Konstruktionsteile einhaken und aushaken können, **dadurch gekennzeichnet**, dass die Schlitze (6) in zwei Flanschen (1, 2) angeordnet sind, die je auf eine Seite der Nahtstelle zwischen den Konstruktionsteilen vorgesehen sind und längs der Nahtstelle verlaufen, und dass die Schiene (3) aus einem U-Eisen-Profil besteht, das die Nahtstelle am Steg überbrückt und an dessen Schenkeln die Haken (7,8) angeordnet sind.

2. Schwerlastschiebeverschluss nach Anspruch 1, **dadurch gekennzeichnet**, dass jeder Flansch aus dem einen Schenkel eines U-Eisen-Profils (1, 2) besteht, welches mit seinem anderen Schenkel an dem zugeordneten Konstruktionsteil (1a bzw. 2a) befestigt ist, wobei die beiden U-Profilen mit den Stegen gegen einander spiegelartig umkehrt angeordnet sind.

3. Schiebeverschluss nach Anspruch 1 oder 2, **dadurch gekennzeichet**, dass eine Winkelschiene (4) als Stütze für die verschiebbare Schiene (3) auf dem feststehenden Konstruktionsteil (1a) angeordnet ist.

4. Schiebeverschluss nach Anspruch 2 oder 3, **dadurch gekennzeichnet**, dass in den Zwischenräumen zwischen den U-Eisen-Profilen (1, 2) und zwischen diesen und der verschiebbaren Schiene (3) ein geräuschdämpfendes Material angeordnet ist.

5. Schiebeverschluss nach einem der Patentansprüche 1 bis 4, **dadurch gekennzeichnet**, dass die dem feststehenden Konstruktionsteil (1a) zugeordneten Haken (7) länger als die dem beweglichen Konstruktionsteil (2a) zugeordneten Haken (8) sind, um Enthaken der verschiebbaren Schiene (3) aus dem Flansch auf dem feststehenden Konstruktionsteil zu verhindern, wenn die dem beweglichen Konstruktionsteil zugeordneten Haken ausgehakt werden.

6. Schiebeverschluss nach einem der Patentanspüche 1 bis 5, **dadurch gekennzeichnet**, dass ein Hubspindel (10) mit Elektromotor und/oder Handantrieb für Verschiebung der verschiebbaren Schiene (3) angeordnet ist.
